# EUROPEAN PATENT APPLICATION

(11) **EP 4 841 803 A1**
(43) Date of publication of application: **18.11.2026**
(21) Application number: 26177951.6
(22) Date of filing: 11.05.2026
(51) Int. Cl.: H01M 50/533, H01M 50/534, H01M 50/538

(54) **SECONDARY BATTERY, BATTERY PACK, AND ELECTRONIC DEVICE**

(30) Priority: 13.05.2025 CN 202510615590
(71) Applicant: AESC Japan Ltd., Yokohama-shi, Kanagawa 220-0012 (JP)
(72) Inventor: GONG, Zhijie, Jiangyin City, Wuxi City, 214443 (CN); LIU, Feiyang, Jiangyin City, Wuxi City, 214443 (CN); JIANG, Zhida, Jiangyin City, Wuxi City, 214443 (CN); HU, Fei, Jiangyin City, Wuxi City, 214443 (CN)
(74) Representative: Becker, Eberhard

(57) **Abstract**

Disclosed are a secondary battery, a battery pack, and an electronic device. The secondary battery includes an electrode assembly, and a negative electrode sheet in the electrode assembly includes a negative electrode current collector, a negative electrode active material layer, and a reinforcing layer. The negative electrode current collector includes an active-material-layer-uncoated region. The reinforcing layer covers a portion of the active-material-layer-uncoated region. The negative electrode sheet has an electrode sheet body and a tab extending from a first edge of the electrode sheet body along a first direction. The active-material-layer-uncoated region includes a tab. A rounded-corner region is provided for transition between a tab side-edge of the tab and the first edge. The active-material-layer-uncoated region has an edge foil exposure region that is not covered by the reinforcing layer. A maximum exposure width d µm of the edge foil exposure region ranges from 1 µm to 700 µm.

## Description

### BACKGROUND

### Technical Field

The present disclosure relates to the field of battery technology, and more specifically, to a secondary battery, a battery pack, and an electronic device.

### Related Art

In the field of new-energy power batteries, the applications of secondary batteries have become increasingly common. By way of example, secondary batteries (e.g., lithium-ion batteries) may be applied in vehicles, energy storage systems, mobile phones, tablet computers, wearable devices, portable power supplies, electronic cigarettes, digital products, electric tools, power units, energy storage devices, and other electronic devices. One type of secondary battery is a prismatic battery, which includes a housing and an electrode assembly. The electrode assembly includes a positive electrode sheet, a negative electrode sheet, and a separator disposed between the positive electrode sheet and the negative electrode sheet, which are sequentially stacked with one another and then wound to form an electrode assembly of a flat rectangular shape, which is thereafter sealed within the housing.

In the related art, a negative electrode current collector of a negative electrode sheet is provided solely with a negative electrode active material layer. The negative electrode active material layer is directly adjacent to a negative-electrode-active-material-layer-uncoated region. As demands for battery energy density and rapid charging increase, the current collector will become progressively thinner, and the susceptibility of ultra-thin current collectors to wrinkling constitutes a problem that urgently requires resolution.

### SUMMARY

### Technical problem

In view of the problems existing in the related art, it is an object of the present disclosure to provide a secondary battery, a battery pack, and an electronic device that are at least capable of reducing wrinkling of a current collector and reducing the occurrence of tearing of a negative tab and scratching of a bottom portion.

### Solution to Problem

To achieve the above purpose, embodiments of the present disclosure provide a secondary battery, which includes an electrode assembly. The electrode assembly includes a negative electrode sheet, a positive electrode sheet, and a separator disposed between the negative electrode sheet and the positive electrode sheet. The negative electrode sheet includes a negative electrode current collector, a negative electrode active material layer, and a reinforcing layer. The negative electrode current collector includes an active-material-layer-coated region covered by the negative electrode active material layer and an active-material-layer-uncoated region not covered by the negative electrode active material layer, which are adjacently disposed along a first direction. The reinforcing layer covers a portion of the active-material-layer-uncoated region. The negative electrode sheet has an electrode sheet body and a tab. The tab extends from a first edge of the electrode sheet body along the first direction. The active-material-layer-uncoated region includes the tab. The tab has a tab top-edge away from the electrode sheet body, and a tab side-edge connected between the tab top-edge and the electrode sheet body. A rounded-corner region is provided for transition between the tab side-edge and the first edge. The reinforcing layer is adjacent, in a second direction, to at least a portion of the rounded-corner region, and the second direction is perpendicular to the first direction. The active-material-layer-uncoated region includes an edge foil exposure region that is not covered by the reinforcing layer and that is disposed between at least a portion of the rounded-corner region and the reinforcing layer, and a maximum exposure width of the edge foil exposure region, measured along a radial direction of the rounded-corner region, is d µm, where d is in a range of 1 to 700.

In some embodiments, the tab side-edge includes a first tab side-edge. An angle between the first tab side-edge and the first edge adjacent thereto is α₁°, where 90° ≤ α₁° ≤ 95°. The rounded-corner region includes a first rounded-corner region located between the first tab side-edge and the first edge. The edge foil exposure region includes a first edge foil exposure region located between the first rounded-corner region and the reinforcing layer. A maximum exposure width of the first edge foil exposure region is d1 µm, where d1 is in a range of 1 to 400.

In some embodiments, the tab side-edge includes a second tab side-edge. An angle between the second tab side-edge and the first edge adjacent thereto is α₂°, where 95° < α₂° < 170°. The rounded-corner region includes a second rounded-corner region located between the second tab side-edge and the first edge. The edge foil exposure region includes a second edge foil exposure region located between the second rounded-corner region and the reinforcing layer. A maximum exposure width of the second edge foil exposure region is d2 µm, where d2 is in a range of 100 to 700, and d2 > d1.

In some embodiments, a portion of the negative electrode active material layer is disposed on a surface of a portion of the tab along the first direction.

In some embodiments, a transition region is disposed between the tab and the active-material-layer-coated region, and the reinforcing layer is located on a surface of a portion of the transition region and the portion of the tab.

In some embodiments, a maximum width of the reinforcing layer in the first direction is W mm, wherein a ratio of W mm to d µm is in a range of 15 to 60.

In some embodiments, the tab is provided with a reinforcing rib, and a maximum width of an overlapping portion of the reinforcing rib and the reinforcing layer in the first direction is D mm, wherein a ratio of D mm to W mm is in a range of 0.1 to 1.

In some embodiments, the secondary battery further includes: a housing, wherein the housing includes a peripheral sidewall and an end wall connected to one end of the peripheral sidewall, the other end of the peripheral sidewall opposite to the end wall is provided with an opening; a lid assembly, covering the opening to define an accommodating cavity together with the housing, wherein the electrode assembly is located in the accommodating cavity, the lid assembly is provided with a terminal, and the tab is connected to the terminal; and an insulating tape, wherein the insulating tape includes a first adhesive region, a second adhesive region, and a non-adhesive region, the first adhesive region covers a portion of an outer peripheral surface of the electrode assembly, the second adhesive region covers a weld mark on the tab for connecting to the terminal, wherein the non-adhesive region covers the reinforcing layer.

An embodiment of the present disclosure further provides a battery pack, which includes the above-mentioned secondary battery.

An embodiment of the present disclosure further provides an electronic device, which includes the above-mentioned battery pack.

### Technical effect

The advantageous technical effects of the present disclosure are as follows:
the technical solution of the present disclosure may effectively reduce current collector wrinkling by disposing the reinforcing layer on the tab. Furthermore, by reasonably configuring the maximum exposure width d µm of the edge foil exposure region to be 1 µm to 700 µm, the problems of negative tab tearing and bottom scratching may be reduced, thereby improving the performance of batteries.

### BRIEF DESCRIPTION OF THE DRAWINGS

In order to more clearly illustrate the technical solutions in the embodiments of the present disclosure or the prior art, the following will briefly introduce the drawings required for use in the description of the embodiments or the related art. Clearly, the drawings described below are some embodiments of the present disclosure, and for those of ordinary skill in the art, other drawings may also be obtained based on these drawings without creative effort.
FIG. 1 illustrates a perspective view of a secondary battery according to an embodiment of the present disclosure.
FIG. 2 illustrates a cross-sectional view of a secondary battery according to an embodiment of the present disclosure.
FIG. 3 is a cross-sectional view of the electrode assembly of the secondary battery in FIG. 2.
FIG. 4A to FIG. 4D are schematic views illustrating different stages of manufacturing a negative electrode sheet according to an embodiment of the present disclosure.
FIG. 4E is a cross-sectional view of FIG. 4D according to an embodiment of the present disclosure.
FIG. 5 is a partial enlarged view of a region A1 in FIG. 4D according to some embodiments.
FIG. 6 is a partial enlarged view corresponding to a region A1 in FIG. 4D according to other embodiments.
FIG. 7A is a schematic view of a negative electrode sheet after cutting a negative tab according to other embodiments.
FIG. 7B is a partial enlarged view corresponding to a region A2 in FIG. 7A according to other embodiments.
FIG. 8A and FIG. 8B are schematic views of portions of a negative electrode sheet according to different embodiments, respectively.
FIG. 9A is a schematic view of two electrode assemblies after welding of tabs, adapter sheets, and terminals according to some embodiments.
FIG. 9B is a schematic view after bonding an insulating tape onto a structure shown in FIG. 9A according to some embodiments.
FIG. 10 illustrates a schematic view when an electronic device in an embodiment of the present disclosure is a vehicle.

### DESCRIPTION OF THE EMBODIMENTS

For a better understanding of the spirit of the embodiments of the present disclosure, further description is provided below in conjunction with some preferred embodiments of the present disclosure.

The embodiments of the present disclosure will be described in detail below. Throughout the specification of the present disclosure, the same or similar components and components having the same or similar functions are denoted by similar reference numerals. The embodiments described herein with respect to the drawings are illustrative and diagrammatic in nature and are provided to provide a basic understanding of the present disclosure. The embodiments of the present disclosure should not be construed as limitations on the present disclosure.

As used herein, the terms "approximately", "substantially", "essentially", and "about" are provided to describe and account for small variations. When used in conjunction with an event or circumstance, the terms may refer to instances in which the event or circumstance occurs precisely as well as instances in which the event or circumstance occurs in close approximation.

In the present specification, unless otherwise specified or limited, relative terms such as "central", "longitudinal", "lateral", "front", "rear", "right", "left", "inner", "outer", "lower", "higher", "horizontal", "vertical", "above", "below", "upper", "lower", "top", "bottom", and derivatives thereof (such as "horizontally", "downwardly", "upwardly", etc.) should be interpreted as referring to the directions described in the discussion or illustrated in the drawings. These relative terms are used only for convenience of description and do not require that the present disclosure be constructed or operated in a particular direction.

For convenience of description, "first", "second", "third", and so on may be used herein to distinguish different components of a drawing or a series of drawings. "First", "second", "third", and so on are not intended to describe the corresponding components. In addition, the embodiments in the present disclosure and the features in the embodiments may be combined with each other without conflict.

In the related art, a negative electrode current collector of a negative electrode sheet is provided solely with a negative electrode active material layer. The negative electrode active material layer is directly adjacent to a negative-electrode-active-material-layer-uncoated region. As demands for battery energy density and rapid charging increase, the current collector will become progressively thinner, and the susceptibility of ultra-thin current collectors to wrinkling constitutes a problem.

On the one hand, to accommodate high-capacity cells, a greater number layers of tabs is required. When laser welding multi-layer tabs to an adapter sheet, the presence of multiple layers of tabs necessitates bending of outer tabs, thereby increasing the required routing length of such tabs. As a result, the height of the tab (i.e., the active-material-layer-uncoated region of a current collector) needs to be increased. For example, whereas a conventional tab height is typically 30 mm to 32 mm, it is now required to be 35 mm to 38 mm. An increased height of the active-material-layer-uncoated region renders the current collector more susceptible to wrinkling. On the other hand, in order to increase energy density, a thickness of the current collector needs to be reduced. Accordingly, in view of requirements relating to battery energy density and fast charging, current collectors are becoming progressively thinner; however, thinner current collectors are more prone to wrinkling.

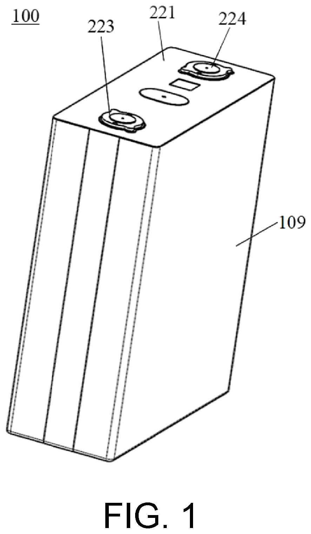

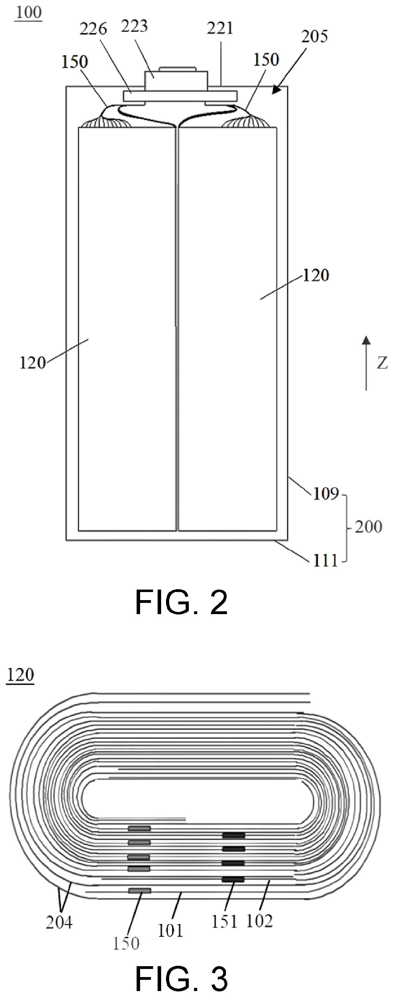

FIG. 1 illustrates a perspective view of a secondary battery according to an embodiment of the present disclosure. FIG. 2 illustrates a cross-sectional view of a secondary battery according to an embodiment of the present disclosure. FIG. 3 is a cross-sectional view of the electrode assembly of the secondary battery in FIG. 2.

As shown in FIG. 1 to FIG. 2, the secondary battery 100 may include a housing 200. The housing 200 includes a peripheral sidewall 109 and an end wall 111 connected to one end of the peripheral sidewall 109, and the other end of the peripheral sidewall 109 opposite to the end wall 111 is provided with an opening 205. A lid assembly 221 covers the opening 205 of the housing 200 so as to define an accommodating cavity together with the housing 200, and an electrode assembly 120 is located in the accommodating cavity.

A direction from the end wall 111 toward the lid assembly 221 is a height direction Z of the secondary battery 100. The height direction Z may correspond to a direction D1 described below. In the present embodiment, along a thickness direction of the electrode assembly 120, two electrode assemblies 120 are stacked and disposed in the housing 200. In other embodiments, more than two electrode assemblies 120 may be disposed in the housing 200.

In some embodiments, referring to FIG. 3, the electrode assembly 120 is a wound structure formed by winding a positive electrode sheet 102, a negative electrode sheet 101, and a separator 204 disposed between the positive electrode sheet 102 and the negative electrode sheet 101. In other embodiments, the electrode assembly 120 may be a stacked structure formed by sequentially stacking the positive electrode sheet 102, the negative electrode sheet 101, and the separator 204 disposed between the positive electrode sheet 102 and the negative electrode sheet 101. The positive electrode sheet 102, the negative electrode sheet 101, and the separator 204 are formed into the electrode assembly 120 by winding or stacking, and the electrode assembly 120 is then sealed within the housing 200 to thereby form the secondary battery. The electrode assembly 120 may be flat. Correspondingly, the housing 200 may be flat and have a rectangular parallelepiped (prismatic) shape. A plurality of positive tabs 151 of the positive electrode sheet 102 and a plurality of negative tabs 150 of the negative electrode sheet 101 may be stacked, respectively, in the thickness direction of the electrode assembly 120.

The positive electrode sheet may include a positive electrode current collector and a positive electrode active material layer, and the positive electrode active material layer is coated on a partial surface of the positive electrode current collector. The negative electrode sheet may include a negative electrode current collector and a negative electrode active material layer, and the negative electrode active material layer is coated on a partial surface of the negative electrode current collector. In some embodiments, for example in a lithium-ion battery, a material of the positive electrode current collector may be aluminum. The positive electrode active material layer may include a positive electrode active material, and the positive electrode active material may be lithium cobalt oxide, lithium iron phosphate, ternary lithium, or lithium manganese oxide, etc. For high-nickel ternary lithium batteries, the positive electrode active material may be a ternary material composed of three elements: nickel, cobalt, and manganese (or aluminum). A material of the negative electrode current collector may be copper. The negative electrode active material layer may include a negative electrode active material, and the negative electrode active material may be carbon or silicon, etc. A material of the separator may be, for example, PP (polypropylene) or PE (polyethylene), etc.

Referring to FIG. 1 to FIG. 3, a negative terminal 223 and a positive terminal 224 are disposed on the lid assembly 221. The negative terminal 223 and the positive terminal 224 may pass through the lid assembly 221, and may be insulated from the lid assembly 221. One end of the electrode assembly 120 facing the lid assembly 221 is provided with tabs, and in the present embodiment, the negative tab 150 and the positive tab 151 on one end of the electrode assembly 120 are connected to the corresponding negative terminal 223 and the corresponding positive terminal 224, respectively. In some embodiments, the positive tab 151 and the positive terminal 224, and the negative tab 150 and the negative terminal 223 may be connected through a corresponding adapter sheet 226. The adapter sheet 226 may be welded to the bent positive tab 151 and the negative tab 150.

It should be understood that FIG. 1 to FIG. 3 are described by taking a secondary battery as a prismatic battery as an example. The secondary battery of the present disclosure may also be any other suitable type of secondary battery, such as a pouch battery, a cylindrical battery, etc.

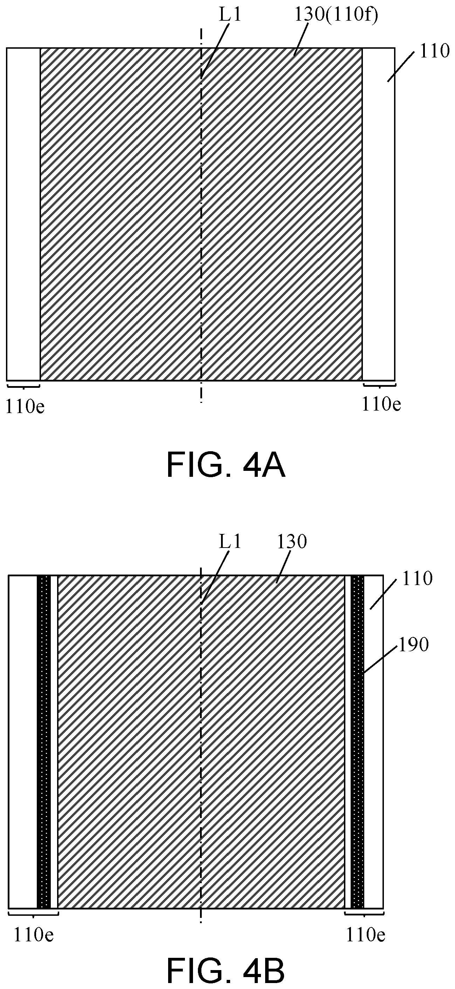

FIG. 4A to FIG. 4E are schematic views illustrating different stages of manufacturing the negative electrode sheet according to an embodiment of the present disclosure. First, referring to FIG. 4A, a negative electrode active material layer 130 is coated on two opposite surfaces of a negative electrode current collector 110 along a thickness direction thereof. In some embodiments, the negative electrode active material layer 130 may be coated on one of the two opposite surfaces of the negative electrode current collector 110. The negative electrode active material layer 130 may be coated on the negative electrode current collector 110 by a coating device. The negative electrode current collector 110 includes an active-material-layer-coated region 110f covered by the negative electrode active material layer 130, and an active-material-layer-uncoated region 110e not covered by the negative electrode active material layer 130. An edge portion of the negative electrode current collector 110 in a width direction is not coated with the negative electrode active material layer 130, thereby forming the active-material-layer-uncoated region 110e. In some embodiments, a material of the negative electrode current collector 110 may be, for example, copper.

Referring to FIG. 4B, a reinforcing layer 190 is coated, and the reinforcing layer 190 covers a portion of the active-material-layer-uncoated region 110e. In some embodiments, the negative electrode active material layer 130 and the reinforcing layer 190 may be coated simultaneously.

In some embodiments, a material of the reinforcing layer 190 may include an aqueous binder, a color developer, and ceramic. In some embodiments, the ceramic particles include, for example, at least one of boehmite, aluminum oxide, titanium dioxide, zirconium dioxide, zinc oxide, barium sulfate, boron nitride, aluminum nitride, or magnesium nitride. In some embodiments, the aqueous binder includes, for example, at least one of polyacrylic acid (PAA), polymerized styrene butadiene rubber (SBR), or carboxymethylcellulose sodium (CMC-Na). In some embodiments, the color developer includes, for example, at least one of carbon black, chromium oxide green, cobalt green, cobalt blue, iron blue, cadmium red, carbon black, or iron oxide red.

If the reinforcing layer 190 does not contain the color developer, the reinforcing layer 190 will be white. As a result, a color contrast between the negative electrode current collector 110 (e.g., copper) and the white reinforcing layer 190 is small, making it difficult for image recognition equipment (e.g., a CCD (charge-coupled device) camera) to identify, thereby giving rise to image recognition problems. In embodiments in which the reinforcing layer 190 includes the color developer (e.g., carbon black), the color of the reinforcing layer 190 may be substantially black, thereby resolving the difficulty in identification by image recognition equipment. In addition, relative to the white reinforcing layer 190, by selecting the reinforcing layer 190 that includes the color developer, the reinforcing layer 190 may absorb more energy, thereby allowing a reduction in the laser power used during tab cutting. In a tab cutting process employing a variable-power laser, a similar effect of reducing laser power may likewise be achieved. Compared with the use of an oil-based binder, by selecting an aqueous binder for the reinforcing layer 190, the negative electrode sheet production line, during preparation of the reinforcing layer 190, need not be equipped with organic vapor (VOC) recovery equipment. The ceramic particles may concurrently provide structural support for the reinforcing layer 190, thereby improving the design of a width of the active-material-layer-uncoated region, enabling a greater width of the active-material-layer-uncoated region, while also enhancing insulating properties of the reinforcing layer 190.

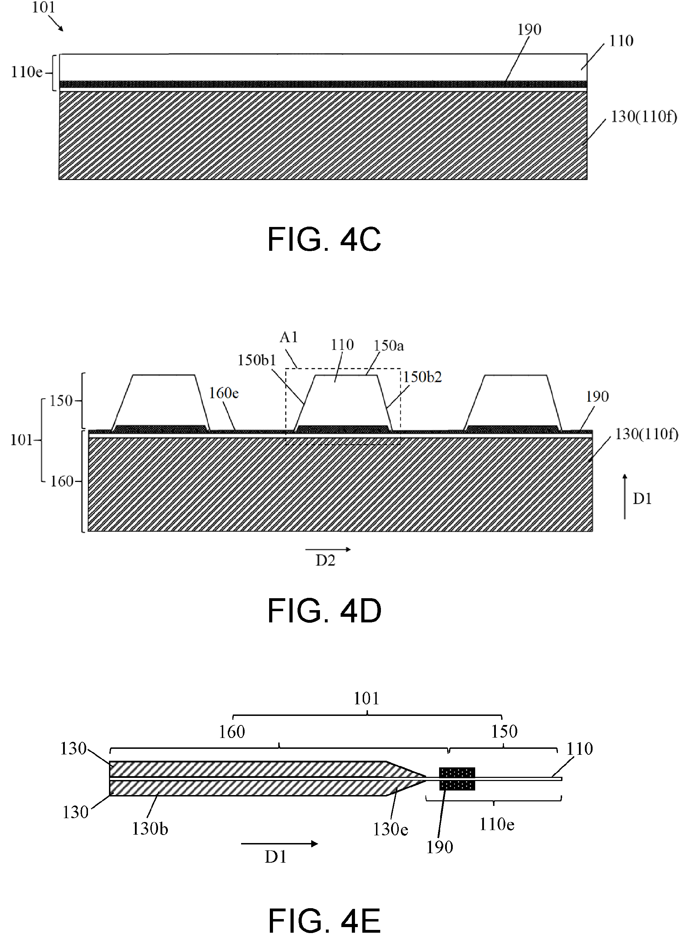

After coating the negative electrode active material layer 130 and the reinforcing layer 190, the negative electrode current collector 110 and the negative electrode active material layer 130 may be cut along a dashed line L1, thereby obtaining a single negative electrode sheet 101 for forming a single electrode assembly as shown in FIG. 4C. Then, a side of the active-material-layer-uncoated region 110e of the negative electrode current collector 110 of the negative electrode sheet 101 may be cut, and this cutting process may be referred to as tab cutting. In some embodiments, a laser may be provided to perform the tab cutting process.

After cutting, referring to FIG. 4D and FIG. 4E, FIG. 4E is a cross-sectional view of FIG. 4D, the plurality of negative tabs 150 are formed at intervals along a length direction (direction D2) of the negative electrode sheet 101. The portions of the negative electrode current collector 110 and the negative electrode active material layer 130 that are not cut may be referred to as the electrode sheet body 160. The negative tabs 150 extend from a first edge 160e of the electrode sheet body 160 along the direction D1 (which may be referred to as the first direction). The active-material-layer-uncoated region 110e includes the negative tabs 150. The direction D1 may correspond to the height direction Z of the secondary battery 100. Referring to FIG. 4E, the electrode sheet body 160 may include the negative electrode current collector 110 and the negative electrode active material layer 130, wherein the negative electrode active material layer 130 at least partially covers the two opposite surfaces of the negative electrode current collector 110 along the thickness direction thereof. In addition, a thinned region 130e is formed at an edge of the negative electrode active material layer 130 along the direction D1, and the thinned region 130e is connected to a straight region 130b where the negative electrode active material layer 130 is uniformly coated. A thickness of the thinned region 130e gradually decreases along the direction D1.

The present disclosure uses the example of cutting a current collector coated with an active material to form tabs; the tabs involved in the present disclosure may also be connected to the electrode sheet body 160 by other means such as welding.

To address the propensity of the current collector to wrinkle, the reinforcing layer 190 is disposed on the negative tab 150, which may effectively reduce wrinkling of the current collector. In addition, by providing the reinforcing layer 190 on the negative tab 150, undesired electrical short-circuiting may be avoided, thereby enhancing battery safety.

Referring further to FIG. 4D, the negative tab 150 is connected to the first edge 160e of the electrode sheet body 160, and the first edge 160e extends along the direction D2 (which may be referred to as the second direction) perpendicular to the direction D1. The direction D2 may be a width direction of the negative tab 150, and the width of each negative tab 150 may decrease as the distance from the electrode sheet body 160 increases. The negative tab 150 has a tab top-edge 150a away from the electrode sheet body 160, and a first tab side-edge 150b1 and a second tab side-edge 150b2 connected between the tab top-edge 150a and the electrode sheet body 160.

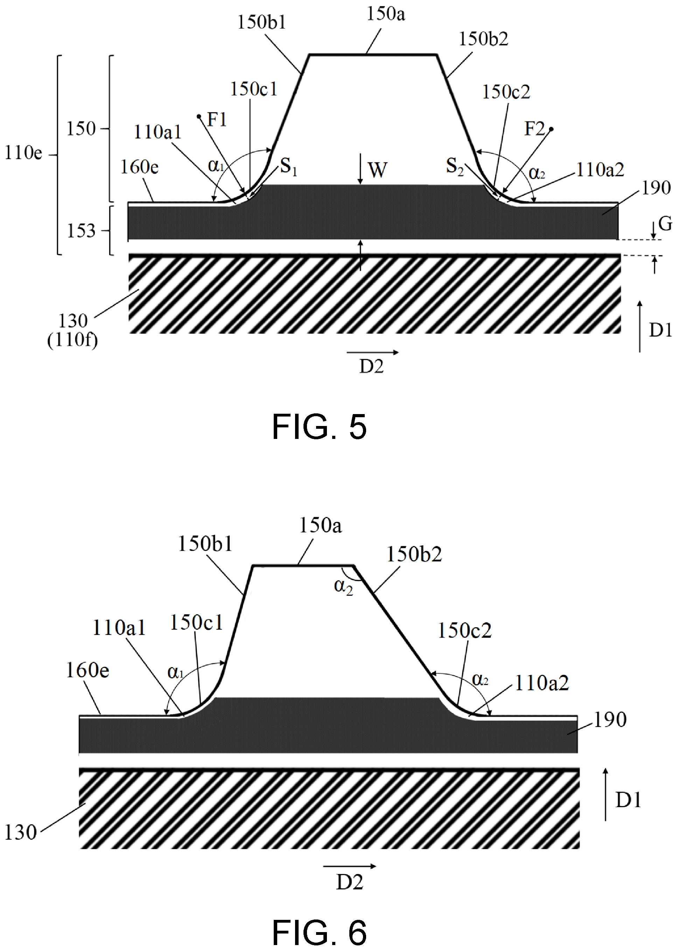

FIG. 5 is a partial enlarged view of a region A1 in FIG. 4D according to some embodiments. Referring to FIG. 5, a first rounded-corner region 150c1 is provided between the first tab side-edge 150b1 and the first edge 160e, and a second rounded-corner region 150c2 is provided between the second tab side-edge 150b2 and the first edge 160e. The first rounded-corner region 150c1 and the second rounded-corner region 150c2 may be formed through the tab cutting process.

The reinforcing layer 190 is adjacent to at least a portion of the first rounded-corner region 150c1 and the second rounded-corner region 150c2 along the direction D2. The active-material-layer-uncoated region 110e has a first edge foil exposure region 110a1 and a second edge foil exposure region 110a2 that are not covered by the reinforcing layer 190. The first edge foil exposure region 110a1 is located between at least a portion of the first rounded-corner region 150c1 and the reinforcing layer 190, and the second edge foil exposure region 110a2 is located between at least a portion of the second rounded-corner region 150c2 and the reinforcing layer 190. A maximum exposure width of the first edge foil exposure region 110a1 and the second edge foil exposure region 110a2, measured along a radial direction of the corresponding first rounded-corner region 150c1 and second rounded-corner region 150c2, is d µm, with d being in a range of 1 to 700. The exposure width of the first edge foil exposure region 110a1 in the first rounded-corner region 150c1 refers to a distance S₁ from an edge in the first rounded-corner region 150c1 along the radial direction F1 of the first rounded-corner region 150c1 to an edge of the adjacent reinforcing layer 190. The exposure width of the second edge foil exposure region 110a2 in the second rounded-corner region 150c2 refers to a distance S₂ from an edge in the second rounded-corner region 150c2 along the radial direction F2 of the second rounded-corner region 150c2 to an edge of the adjacent reinforcing layer 190. That is, the maximum exposure widths of the first edge foil exposure region 110a1 in the first rounded-corner region 150c1 and the second edge foil exposure region 110a2 in the second rounded-corner region 150c2 are 1 µm to 700 µm, respectively.

The first edge foil exposure region 110a1 and the second edge foil exposure region 110a2 may be formed through tab cutting, for example, formed through laser ablation heat used in cutting. Burrs may be present in the first rounded-corner region 150c1 and the second rounded-corner region 150c2 of the active-material-layer-uncoated region 110e of the negative electrode current collector 110. If the widths of the first edge foil exposure region 110a1 and the second edge foil exposure region 110a2 are excessively large, the negative tab is likely to be torn along the burrs. Further, in the electrode assembly 120 of a wound structure or a stacked structure, the negative tabs are required to be aligned for welding; when the negative tabs are aligned, the first edge foil exposure region 110a1 and the second edge foil exposure region 110a2 may cause scratching at the bases of the corresponding tabs. By appropriately configuring the maximum exposure width d µm of the first edge foil exposure region 110a1 and the second edge foil exposure region 110a2, where d ranges from 1 to 700, the issues of negative tab tearing and base scratching may be mitigated, thereby improving the performance of batteries.

In this embodiment, during the tab cutting process, only the region covered by the reinforcing layer 190 is cut, such that the reinforcing layer 190 is disposed in the active-material-layer-uncoated region 110e in the electrode sheet body 160, and is also disposed on the active-material-layer-uncoated region 110e in the negative tab 150. A transition region 153 is disposed between the negative tab 150 and an active-material-layer-coated region 130f, and the reinforcing layer 190 is disposed on a surface of a portion of the transition region 153 and a portion of the negative tab 150.

The reinforcing layer 190 on the negative tab 150 may provide a supporting function for the negative tab 150. The reinforcing layer 190 on the electrode sheet body 160 further extends between the first edge 160e of the electrode sheet body 160 and the negative electrode active material layer 130. The first edge foil exposure region 110a1 extends along at least a portion (at least a portion adjacent to the negative electrode active material layer 130) of the first rounded-corner region 150c1 and the first edge 160e. The second edge foil exposure region 110a2 extends along at least a portion (at least a portion adjacent to the negative electrode active material layer 130) of the second rounded-corner region 150c2 and the first edge 160e.

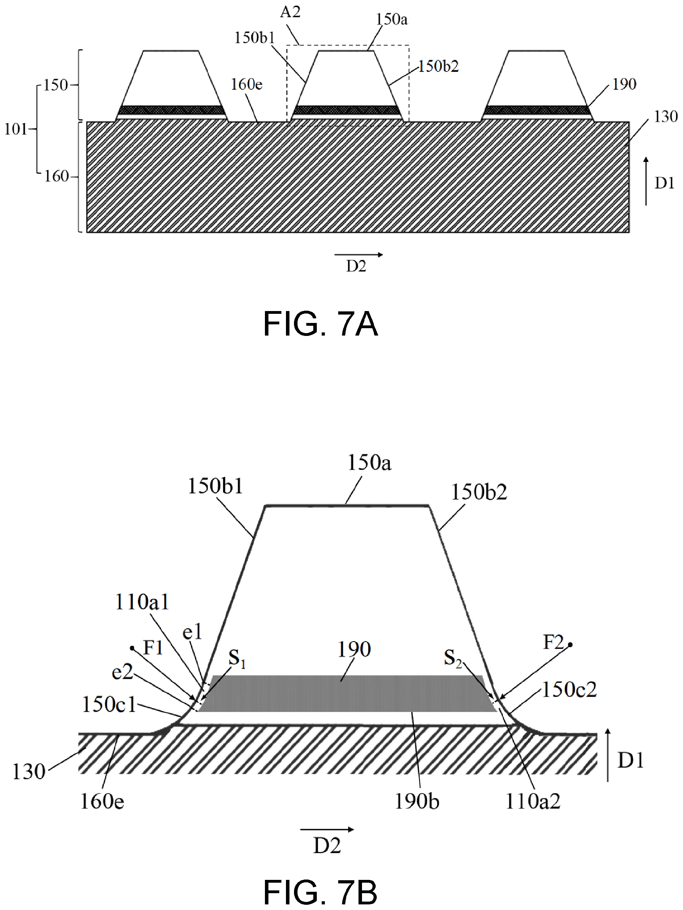

In the negative electrode sheet 101 of such structure, since only the region covered by the reinforcing layer 190 is cut, the laser energy used for cutting may be reduced, thereby reducing energy consumption. That is to say, compared to cutting the active-material-layer-coated region (as described below with respect to FIG. 7A and FIG. 7B), the laser energy is lower. Due to the reduced laser power and energy, the widths of the first edge foil exposure region 110a1 and the second edge foil exposure region 110a2 may be reduced. Furthermore, in embodiments where the reinforcing layer 190 includes the color developer (e.g., carbon black), compared to the white reinforcing layer, by selecting the reinforcing layer 190 that includes the color developer, the power of the laser used during the tab cutting process may be more significantly reduced.

In some embodiments, a maximum width of the reinforcing layer 190 in the direction D1 is W mm. A ratio of W mm to the width d µm of each of the first edge foil exposure region 110a1 and the second edge foil exposure region 110a2 is W/d. In some embodiments, W/d is in a range of 15 to 60. In some embodiments, the maximum width of the reinforcing layer 190 is 4 mm to 6 mm, for example 6 mm. When the maximum width W mm of the reinforcing layer 190 is fixed, the range of this ratio may reasonably optimize the value of d µm to balance supportability. On the other hand, it is also possible to avoid the width of the coated reinforcing layer 190 from being excessively wide, thereby avoiding areas of the first edge foil exposure region 110a1 and the second edge foil exposure region 110a2 from being excessively large, which would affect safety performance.

An angle between the first tab side-edge 150b1 and the adjacent first edge 160e is α₁°, and an angle between the second tab side-edge 150b2 and the adjacent first edge 160e is α₂°. In this embodiment, α₁° and α₂° may be equal to each other. In some embodiments, 90° ≤ α₁° ≤ 170°, and 90° ≤ α₂° ≤ 170°.

In the direction D1, there is a gap g between the reinforcing layer 190 and the negative electrode active material layer 130. Since the coated reinforcing layer 190 and the negative electrode active material layer 130 may both be aqueous, in some embodiments, the reinforcing layer 190 is an aqueous binder, and a peel strength between the reinforcing layer 190 and the negative electrode current collector 110 is > 300 N/m. If no gap is provided between the reinforcing layer 190 and the negative electrode active material layer 130, solute diffusion causes the aqueous negative electrode active material layer 130 and/or the reinforcing layer 190 to exhibit pronounced edge swelling. By providing the gap G, edge swelling of the negative electrode active material layer 130 and/or the reinforcing layer 190 may be avoided. In some embodiments, in view of process capability, the gap G has a value ranging from 0.1 mm to 1.1 mm, for example from 0.1 mm to 1.0 mm, or from 0.1 mm to 0.5 mm. If a dimension of the gap G is too small, mutual dissolution and edge swelling are likely to occur; if the dimension of the gap G is too large, wrinkling of the current collector cannot be effectively reduced. In some embodiments, the reinforcing layer 190 has a thickness of 5 µm to 25 µm. If the thickness is less than 5 µm, the reinforcing layer 190 is too thin and may not achieve the effect of reducing wrinkling of the current collector.

FIG. 6 is a partial enlarged view corresponding to the region A1 in FIG. 4D according to some other embodiments. Multiple aspects of the embodiment shown in FIG. 6 may be similar to those described above with reference to FIG. 4A to FIG. 5, and the following mainly describes the differences of the embodiment shown in FIG. 6. Referring to FIG. 6, a range of α₁°, which is the angle between the first tab side-edge 150b1 and the adjacent first edge 160e, may be 90° ≤ α₁° ≤ 95°. The maximum exposure width of the first edge foil exposure region 110a1 may specifically be d1 µm, with d1 being in a range of 1 to 400. A range of α₂°, which is the angle between the second tab side-edge 150b2 and the adjacent first edge 160e, may be 95° < α₂° < 170°, and α₂° > α₁°. The maximum exposure width of the second edge foil exposure region 110a2 may specifically be d2 µm, with d2 being in a range of 100 to 700, and d2 > d1. During the tab cutting process, the cut is performed by moving the negative electrode sheet. During electrode sheet cutting, the moving speed of the electrode sheet is fixed, so when an inclination angle of α₂° is large, the laser dwell time will be long, causing the width d2 µm of the second edge foil exposure region 110a2 to be larger. Therefore, by controlling the moving speed during cutting of the electrode sheet, the width d2 µm of the second edge foil exposure region 110a2 may be maintained within the aforesaid range, so as to prevent the width d2 µm of the second edge foil exposure region 110a2 on a side having the greater inclination angle from becoming excessive, which would otherwise result in burr-induced scratching between tabs, thereby enhancing the safety performance of batteries.

FIG. 7A is a schematic view of a negative electrode sheet after cutting a negative tab according to other embodiments. FIG. 7B is a partial enlarged view corresponding to a region A2 in FIG. 7A according to other embodiments. Multiple aspects of the embodiments shown in FIG. 7A and FIG. 7B may be similar to those described above with reference to FIG. 4A to FIG. 5, and the following mainly describes the differences of the embodiments shown in FIG. 7A and FIG. 7B. Referring to FIG. 7A and FIG. 7B, in the present embodiment, the reinforcing layer 190 is located only on the negative tab 150. A portion of the negative electrode active material layer 130 may extend along the direction D1 onto a surface of the negative tab 150.

The reinforcing layer 190 is adjacent to at least a portion of the first rounded-corner region 150c1 and the second rounded-corner region 150c2 along the direction D2. A bottom edge 190b of the reinforcing layer 190 adjacent to the negative electrode active material layer 130 is adjacent to the first rounded-corner region 150c1 and the second rounded-corner region 150c2 along the direction D2. In the negative electrode sheet 101 of such structure, since the regions covered by both the reinforcing layer 190 and the negative electrode active material layer 130 are cut, an area of the negative electrode active material layer 130 in the electrode sheet body 160 may be improved, thereby improving the energy density of the battery. Moreover, the negative electrode active material layer 130 and the reinforcing layer 190 on the negative tab 150 may be provided together to provide support to the tabs, thereby improving the support capability for the tabs.

In the present embodiment, the reinforcing layer 190 is adjacent to a corresponding portion of the first rounded-corner region 150c1 along the direction D2. Specifically, an end portion e1 of the first rounded-corner region 150c1 is connected to the first tab side-edge 150b1, and a midpoint e2 of the first rounded-corner region 150c1 is aligned with an end portion of the bottom edge 190b of the reinforcing layer 190 along radial the direction F1. A portion from the end portion e1 to the midpoint e2 corresponds to the first rounded-corner region 150c1 and the reinforcing layer 190.

In the present embodiment, the exposure width of the first edge foil exposure region 110a1 in the first rounded-corner region 150c1 refers to the distance S₁ from a portion of the first rounded-corner region 150c1 between the end portion e1 and the midpoint e2, measured along the radial direction F1, to the edge of the adjacent reinforcing layer 190. Similarly, the exposure width of the second edge foil exposure region 110a2 in the second rounded-corner region 150c2 refers to the distance S₂ from an edge of a portion of the second rounded-corner region 150c2 corresponding to the reinforcing layer 190, measured along the radial direction F2, to the edge of the adjacent reinforcement layer 190. In some embodiments, the maximum exposure width d µm of the first edge foil exposure region 110a1 in the first rounded-corner region 150c1 and of the second edge foil exposure region 110a2 in the second rounded-corner region 150c2 falls within a range of 1 µm to 700 µm.

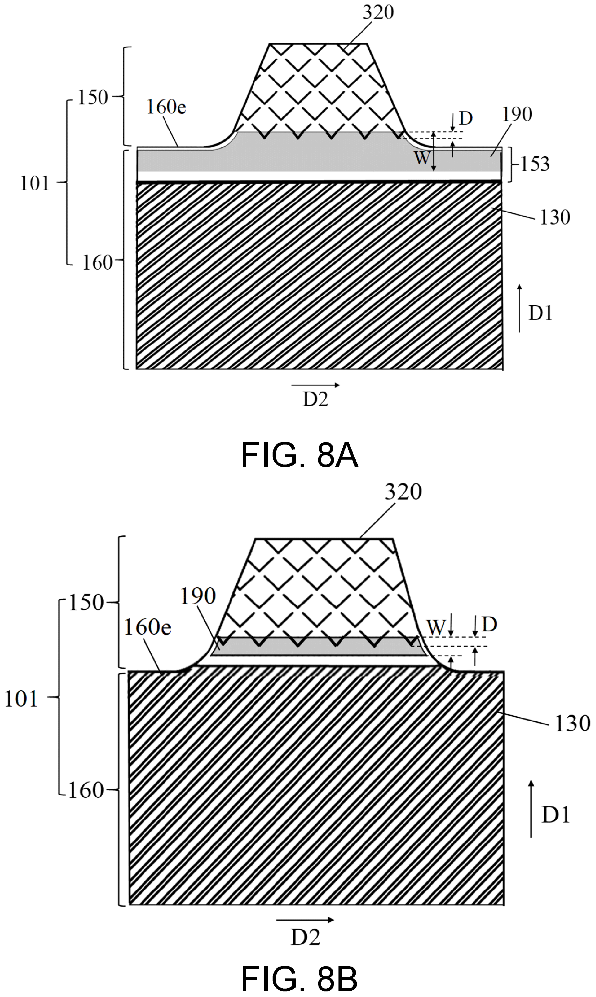

FIG. 8A and FIG. 8B are schematic views of portions of negative electrode sheets according to different embodiments, respectively. The reinforcing layer 190 configuration in the embodiment shown in FIG. 8A may be similar to that described above with reference to FIG. 5, and the reinforcing layer 190 configuration in the embodiment shown in FIG. 8B may be similar to that described above with reference to FIG. 7A and FIG. 7B.

Referring to FIG. 8A and FIG. 8B, a reinforcing rib 320 may be disposed on the negative tab 150. In FIG. 8A and FIG. 8B, as an example, the reinforcing rib 320 are an array of multiple V-shaped reinforcing ribs. It will be understood that the reinforcing rib 320 may be formed in the tab by a stamping process. The reinforcing rib 320 may alternatively have any other suitable shape, such as at least one of dot-like, strip-like, wavy, or zigzag. A portion of the reinforcing rib 320 that faces the negative electrode active material layer 130 overlaps the reinforcing layer 190. A maximum width, in the direction D1, of the overlapping portion of the reinforcing rib 320 and the reinforcing layer 190 is D mm, wherein a ratio of D mm to the maximum width W mm of the reinforcing layer 190 is D/W, with D/W being in a range of 0.1 to 1. By disposing a portion of the reinforcing rib 320 on the reinforcing layer 190 and setting the maximum width D mm of the overlapping portion of the reinforcing rib 320 and the reinforcing layer 190 within the proper range, the strength of the reinforcing layer 190 may be increased and the strength of the tab may be enhanced, thereby reducing tab wrinkling. Furthermore, a width of a bare-foil region of the tab may be increased, thereby accommodating a greater number of layers of tabs and reducing the DCR (direct-current internal resistance) of batteries.

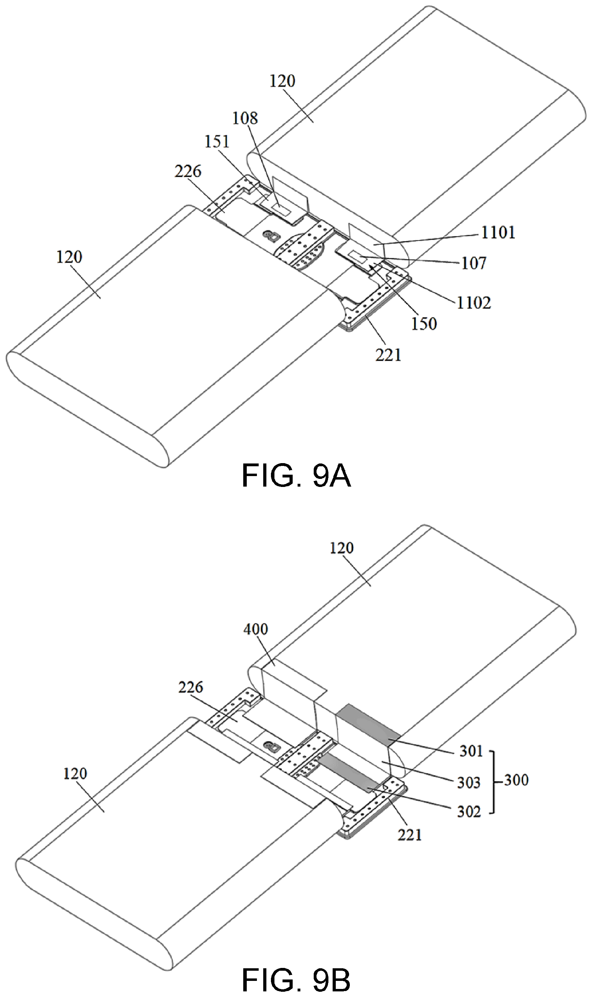

FIG. 9A is a schematic view of two electrode assemblies after welding of tabs, adapter sheets, and terminals according to some embodiments. FIG. 9B is a schematic view after bonding an insulating tape onto a structure shown in FIG. 9A according to some embodiments.

Referring to FIG. 9A and FIG. 9B, the secondary battery may further include an insulating tape 300, and the insulating tape 300 includes a first adhesive region 301, a second adhesive region 302, and a non-adhesive region 303. In some embodiments, the insulating tape 300 is an adhesive tape. The insulating tape 300 may include a base layer and an adhesive layer, and the adhesive layer may be disposed in the first adhesive region 301 and the second adhesive region 302, so as to provide adhesion to the first adhesive region 301 and the second adhesive region 302. The non-adhesive region 303 may include only the base layer without the adhesive layer.

The first adhesive region 301 covers a portion of an outer peripheral surface of the electrode assembly 120 adjacent to the negative tab 150. The second adhesive region 302 covers a weld mark 107 on the negative tab 150. The weld mark 107 may be a weld mark formed by welding the negative tab 150 to the adapter sheet 226, so as to connect the negative tab 150 to the negative terminal 223 through the adapter sheet 226. The electrode assembly 120 may include a main body and the active-material-layer-uncoated region 110e, and the active-material-layer-uncoated region 110e may include a bent portion 1101 and a connecting portion 1102. The connecting portion 1102 may be welded to the adapter sheet 226 so as to be fixedly connected to the lid assembly 221 through the adapter sheet 226. The bent portion 1101 may be connected between the main body of the electrode assembly 120 and the connecting portion 1102. The non-adhesive region 303 covers the reinforcing layer 190 and may contact the reinforcing layer 190. By disposing the insulating tape 300, the safety performance of the negative tab 150 may be improved, and the non-adhesive region 303 covers the reinforcing layer 190, which may prevent the reinforcing layer 190 from being bonded by the adhesive layer and falling off. Meanwhile, the reinforcing layer 190 may provide a supporting function to avoid tab insertion and tearing.

Similarly, the secondary battery may further include an insulating tape 400 disposed on the positive tab 151. The insulating tape 400 may cover the positive tab 151 (for example, a weld mark 108 formed by welding the positive tab 151 to the adapter sheet 226), and cover a portion of the outer peripheral surface of the electrode assembly 120 adjacent to the positive tab 151.

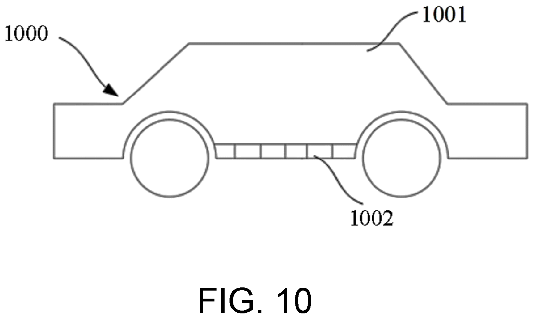

FIG. 10 shows a schematic view when an electronic device in an embodiment of the present disclosure is a vehicle. Referring to FIG. 10, the present disclosure further provides an electronic device 1000. For convenience of description, the following embodiments take the electronic device 1000 as a vehicle as an example for description. A battery pack 1002 is disposed inside the vehicle, and the battery pack 1002 may be disposed at the bottom, front, or rear of a vehicle body 1001. The battery pack 1002 may be used to supply power to a vehicle; for example, the battery pack 1002 may serve as an operating power source of the vehicle. A working portion of the electronic device 1000 is electrically connected to the battery pack 1002 so as to receive electrical power. The vehicle may be a fuel-powered automobile, a gas-fueled automobile, or a new-energy vehicle. The new-energy vehicle may be, for example, a battery electric vehicle, a hybrid electric vehicle, or a range-extended vehicle, but is not limited thereto. In this embodiment, the working portion is the vehicle body, the battery pack 1002 is disposed at a bottom of the vehicle body 1001, and electrical power is provided for vehicle travel or for operation of in-vehicle electrical components. However, in other embodiments, the electronic device 1000 may also be a mobile phone, a portable device, a notebook computer, a ship, an aerospace vehicle, an electric toy, or an electric tool, among others. The aerospace vehicle includes airplanes, rockets, space shuttles, and spacecraft, among others. The working portion may receive electrical energy from the battery pack 1002 and perform corresponding work by means of unit components, such as a blade rotation unit of a fan or a suction working unit of a vacuum cleaner. Electric toys include stationary or mobile electric toys, such as game consoles, electric automobile toys, electric ship toys, and electric airplane toys, among others. Electric tools include metal-cutting power tools, grinding power tools, assembly power tools, and power tools for railway use, such as electric drills, electric grinders, electric wrenches, electric screwdrivers, rotary hammers, impact drills, concrete vibrators, and electric planers, among others. The embodiments of the present disclosure impose no particular limitation on the foregoing electronic device 1000. The battery pack 1002 may include a plurality of secondary batteries, for example, the secondary battery 100 described above.

## Claims

1. A secondary battery (100), comprising:
an electrode assembly (120),
wherein the electrode assembly (120) comprises: a negative electrode sheet (101), a positive electrode sheet (102), and a separator (204) disposed between the negative electrode sheet (101) and the positive electrode sheet (102),
wherein the negative electrode sheet (101) comprises a negative electrode current collector (110), a negative electrode active material layer (130), and a reinforcing layer (190),
the negative electrode current collector (110) comprises an active-material-layer-coated region (130f) covered by the negative electrode active material layer (130) and an active-material-layer-uncoated region (110e) not covered by the negative electrode active material layer (130), which are adjacently disposed along a first direction (D1),
the reinforcing layer (190) covers a portion of the active-material-layer-uncoated region (110e),
wherein the negative electrode sheet (101) has an electrode sheet body (160) and a tab (150),
the tab (150) extends from a first edge (160e) of the electrode sheet body (160) along the first direction (D1),
the active-material-layer-uncoated region (110e) comprises the tab (150),
the tab (150) has a tab top-edge (150a) away from the electrode sheet body (160), and a tab side-edge (150b1, 150b2) connected between the tab top-edge (150a) and the electrode sheet body (160),
a rounded-corner region (150c1, 150c2) is provided for transition between the tab side-edge (150b1, 150b2) and the first edge (160e),
the reinforcing layer (190) is adjacent, in a second direction (D2), to at least a portion of the rounded-corner region (150c1, 150c2) , and
the second direction (D2) is perpendicular to the first direction (D1); and
wherein the active-material-layer-uncoated region (110e) comprises an edge foil exposure region (110a1, 110a2) that is not covered by the reinforcing layer (190) and that is disposed between the at least a portion of the rounded-corner region (150c1, 150c2) and the reinforcing layer (190), and
a maximum exposure width of the edge foil exposure region (110a1, 110a2), measured along a radial direction of the rounded-corner region (150c1, 150c2), is d µm,
where d is in a range of 1 to 700.

2. The secondary battery (100) according to claim 1, wherein
the tab side-edge (150b1, 150b2) comprises a first tab side-edge (150b1),
an angle between the first tab side-edge (150b1) and the first edge (160e) adjacent thereto is α₁°,
where 90° ≤ α₁° ≤ 95°,
the rounded-corner region (150c1, 150c2) comprises a first rounded-corner region (150c1) located between the first tab side-edge (150b1) and the first edge (160e),
the edge foil exposure region (110a1, 110a2) comprises a first edge foil exposure region (110a1) located between the first rounded-corner region (150c1) and the reinforcing layer (190),
a maximum exposure width of the first edge foil exposure region (110a1) is d1 µm,
where d1 is in a range of 1 to 400.

3. The secondary battery (100) according to claim 1 or 2, wherein
the tab side-edge (150b1, 150b2) comprises a second tab side-edge (150b2),
an angle between the second tab side-edge (150b2) and the first edge (160e) adjacent thereto is α₂°,
where 95° < α₂° < 170°,
the rounded-corner region (150c1, 150c2) comprises a second rounded-corner region (150c2) located between the second tab side-edge (150b2) and the first edge (160e),
the edge foil exposure region (110a1, 110a2) comprises a second edge foil exposure region (110a2) located between the second rounded-corner region (150c2) and the reinforcing layer (190),
a maximum exposure width of the second edge foil exposure region (110a2) is d2 µm,
where d2 is in a range of 100 to 700, and d2 > d1.

4. The secondary battery (100) according to claim 1, wherein
a portion of the negative electrode active material layer (130) is disposed on a surface of a portion of the tab (150) along the first direction (D1).

5. The secondary battery (100) according to claim 1, wherein
a transition region (153) is disposed between the tab (150) and the active-material-layer-coated region (130f), and
the reinforcing layer (190) is located on a surface of a portion of the transition region (153) and a portion of the tab (150).

6. The secondary battery (100) according to claim 1, wherein
a maximum width of the reinforcing layer (190) in the first direction (D1) is W mm,
wherein a ratio of W mm to d µm is in a range of 15 to 60.

7. The secondary battery (100) according to claim 6, wherein
the tab (150) is provided with a reinforcing rib (320), and
a maximum width of an overlapping portion of the reinforcing rib (320) and the reinforcing layer (190) in the first direction (D1) is D mm,
wherein a ratio of D mm to W mm is in a range of 0.1 to 1.

8. The secondary battery (100) according to claim 1, further comprising:
a housing (200), comprising a peripheral sidewall (109) and an end wall (111) connected to one end of the peripheral sidewall (109), wherein the other end of the peripheral sidewall (109) opposite to the end wall (111) is provided with an opening (205);
a lid assembly (221), covering the opening (205) to define an accommodating cavity together with the housing (200), wherein the electrode assembly (120) is located in the accommodating cavity, the lid assembly (221) is provided with a terminal (223), and the tab (150, 151) is connected to the terminal (223); and
an insulating tape (300), comprising a first adhesive region (301), a second adhesive region (302), and a non-adhesive region (303), wherein the first adhesive region (301) covers a portion of an outer peripheral surface of the electrode assembly (120), the second adhesive region (302) covers a weld mark (107) on the tab (150) for connecting to the terminal (223), wherein the non-adhesive region (303) covers the reinforcing layer (190).

9. A battery pack (1002), comprising:
the secondary battery (100) according to any one of claims 1 to 8.

10. An electronic device (1000), comprising:
the battery pack (1002) according to claim 9.
